# EUROPÄISCHE PATENTSCHRIFT

(11) **EP 3 873 009 B1**
(45) Veröffentlichungstag und Bekanntmachung des Hinweises auf die Patenterteilung: **21.08.2024**
(21) Anmeldenummer: 20160114.3
(22) Anmeldetag: 28.02.2020
(51) Int. Cl.: H04L 47/283, H04J 3/06, G05B 19/00

(54) **VERFAHREN ZUR SYNCHRONISATION VON STEUERUNGSANWENDUNGEN ÜBER EIN KOMMUNIKATIONSNETZ ZUR ÜBERMITTLUNG ZEITKRITISCHER DATEN, NETZINFRASTRUKTURGERÄT UND KOMMUNIKATIONSENDGERÄT**
METHOD FOR SYNCHRONISING CONTROL APPLICATIONS OVER A COMMUNICATIONS NETWORK FOR TRANSMITTING TIME-CRITICAL DATA, NETWORK INFRASTRUCTURE DEVICE AND COMMUNICATIONS END DEVICE
PROCÉDÉ DE SYNCHRONISATION DES APPLICATIONS DE COMMANDE SUR UN RÉSEAU DE COMMUNICATION PERMETTANT DE TRANSMETTRE DES DONNÉES TEMPORELLEMENT CRITIQUES, APPAREIL D'INFRASTRUCTURE DE RÉSEAU ET TERMINAL DE COMMUNICATION

(43) Veröffentlichungstag der Anmeldung: 01.09.2021
(73) Patentinhaber: Siemens Aktiengesellschaft, 80333 München (DE)
(72) Erfinder: Albrecht, Harald, 90475 Nürnberg (DE); Götz, Franz-Josef, 91180 Heideck (DE); Schmitt, Jürgen, 90766 Fürth (DE)
(74) Vertreter: Siemens Patent Attorneys

(56) Entgegenhaltungen:
- WO-A1-2018/166576
- US-A1- 2004 258 097
- US-A1- 2007 268 938
- US-A1- 2013 128 903

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/ Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen können jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, problematisch werden.

Für Anwendungen mit erhöhten Echtzeit-Anforderungen kann eine Datenübermittlung mittels Time-Aware Scheduler nach IEEE 802.1Qbv realisiert werden. Ein Time-Aware Scheduler ermöglicht es, eine Datenübermittlung innerhalb eines Kommunikationsnetzes basierend auf einem Zeitmultiplexverfahren (Time-Division Multiple Access - TDMA) in feste, sich wiederholende Zyklen einzuteilen. Innerhalb dieser Zyklen können nach einem festen Raster unterschiedliche Prioritäten bedient werden. Auf diese Weise können zeitkritische Daten zur Steuerung von Automatisierungsgeräten von Daten ohne besondere EchtzeitAnforderungen separiert und somit Latenzgarantien eingehalten werden. Eine Datenübermittlung mittels Time-Aware Scheduler erfordert grundsätzlich eine Uhrzeitsynchronisation in sämtlichen Netzknoten.

Entsprechend IEEE 802.1Qcc (Stream Reservation Protocol (SRP) Enhancements and Performance Improvements) ist insbesondere für Time-Sensitive Networking vorgesehen, dass Endstationen, beispielsweise Automatisierungsgeräte, in Kommunikationsnetzen zur Übermittlung von Multicast-Datenströmen mit gewünschten Dienstgüteparametern (Quality of Service) erforderliche Ressourcen mittels Reservierungsanfragen reservieren können. In Abhängigkeit von im Kommunikationsnetz verfügbaren Ressourcen werden Reservierungsanfragen erfüllt oder abgelehnt. Für Entscheidungen über Reservierungsanfragen erforderliche Berechnungen werden wahlweise auf Basis eines dezentralen bzw. eines zentralen Konfigurationsmodells durchgeführt. Beim dezentralen Konfigurationsmodell ermitteln Bridges bzw. Switches jeweils für sich bereits anderweitig genutzte sowie noch verfügbare Ressourcen und teilen der jeweiligen Endstation dementsprechend mit, ob ihre Reservierungsanfrage erfüllt werden kann.

In EP 1 940 089 A1 ist ein Verfahren zur Datenübermittlung in Funk-Kommunikationsnetzen beschrieben, bei dem Verzögerungen bei der Datenübermittlung berücksichtigt werden. Insbesondere werden die Verzögerungen über einen jeweiligen Übertragungsweg aufsummiert. Abhängig von einer akkumulierten Verzögerung wird ein Übertragungsprotokoll ausgewählt, um mittels des ausgewählten Übertragungsprotokolls eine gewünschte Übertragungsdauer sicherzustellen.

Aus WO 2018/166576 A1 ist ein Verfahren zur zeitgesteuerten Datenübertragung von Datenpaketen in einem TSN-Kommunikationssystem (Time-sensitive Network) bekannt, bei dem Datenpakete in allen Netzknoten innerhalb gleichgroßer vorgeplanter Zeitfenster übermittelt werden. Die Netzknoten verfügen jeweils über einen eigenen unabhängigen Zeitmesser, der nicht mit Zeitmessern anderer Netzknoten synchronisiert ist. Diese Zeitfenster beginnen und enden bei allen Netzknoten zu denselben Zeitpunkten. Die Datenpakete werden jeweils von einem Netzknoten zu einem nachfolgenden Netzknoten innerhalb eines Zeitfensters übertragen, das dem Zeitfenster folgt, in dem das jeweilige Datenpaket von einem vorangehenden Netzknoten empfangen worden ist. Jeder Netzknoten bestimmt mittels seines eigenen Zeitmessers und auf Basis eines durch den jeweils vorangehenden Netzknoten ermittelten Verzögerungswerts, zu welchem Zeitpunkt das nächste Zeitfenster beginnt bzw. endet.

Entsprechend der älteren europäischen Patentanmeldung EP 3 674 824 A1 wird für Datenströme, die auf Endgeräten ablaufenden ausgewählten Steuerungsanwendungen zugeordnet sind, jeweils ein individuelles Zeitfenster innerhalb vorgegebener Zeitintervalle spezifiziert. Die Zeitfenster weisen jeweils eine individuelle Zyklusdauer auf, die ein Vielfaches einer allgemeinen Zyklusdauer ist oder der allgemeinen Zyklusdauer entspricht. Erste bzw. zweite Kommunikationsgeräte überprüfen für die ausgewählten Steuerungsanwendungen jeweils, ob ein spezifiziertes Zeitfenster zur Datenübermittlung verfügbar ist. Bei einem verfügbaren Zeitfenster wird jeweils eine Information über einen Beginn des Zeitfensters innerhalb der vorgegebenen Zeitintervalle an das Endgerät übermittelt, auf dem die jeweilige ausgewählte Steuerungsanwendung abläuft. Datenströme, die ausgewählten Steuerungsanwendungen zugeordnet sind, werden jeweils entsprechend der Information über den Beginn des individuellen Zeitfensters übermittelt.

US 2004/258097 A1 betrifft ein Verfahren zur Synchronisation von Knoten eines Kommunikationssystems, bei dem ein erstes Synchronisationstelegramm durch einen ersten Knoten empfangen wird. Das erste Synchronisationstelegramm umfasst einen Soll-Empfangszeitpunkt an dem ersten Knoten. Basierend auf einer Abweichung zwischen einem aufgrund der Zeitbasis ermittelten Ist-Empfangszeitpunkt und dem Soll-Empfangszeitpunkt wird eine Zeitbasis des ersten Knotens nachgeregelt.

Kommunikationsnetze zur Übermittlung zeitkritischer Daten insbesondere in industriellen Automatisierungssystemen werden üblicherweise durch eine Vielzahl von Steuerungsanwendungen genutzt, die jeweils hohe Echtzeit-Anforderungen aufweisen. Typischerweise sind diese Steuerungsanwendungen unabhängig voneinander. Durch bisher verfügbare Kommunikationsgeräte wird nur eine begrenzte Anzahl unterschiedlicher Synchronisationsdomains unterstützt. Dementsprechend kann ohne eine gemeinsame Zeitbasis nur eine geringe Anzahl von zu synchronisierenden Steuerungsanwendungen pro Netzkomponente unterstützt werden.

Der vorliegenden Erfindung liegt die Aufgabe zugrunde, ein aufwandsarm realisierbares Verfahren zur Synchronisation einer Vielzahl von Steuerungsanwendungen über ein Kommunikationsnetz zur Übermittlung zeitkritischer Daten zu schaffen und geeignete Vorrichtungen zur Durchführung des Verfahrens anzugeben.

Diese Aufgabe wird erfindungsgemäß durch ein Verfahren mit den in Anspruch 1 angegebenen Merkmalen und durch ein Netzinfrastrukturgerät mit den in Anspruch 15 angegebenen Merkmalen gelöst. Vorteilhafte Weiterbildungen sind in den abhängigen Ansprüchen angegeben.

Entsprechend dem erfindungsgemäßen Verfahren zur Synchronisation von Steuerungsanwendungen über ein Kommunikationsnetz zur Übermittlung zeitkritischer Daten umfasst das Kommunikationsnetz Kommunikationsendgeräte, insbesondere industrielle Automatisierungsgeräte mit Kommunikationsmodul, an Anfangs- bzw. Endknoten von Pfaden für Datenströme und Netzinfrastrukturgeräte, insbesondere Switches oder Bridges, an Zwischenknoten. Dabei sind ausgewählte Datenströme auf Kommunikationsendgeräten ablaufenden Steuerungsanwendungen zugeordnet. Die Netzinfrastrukturgeräte ermitteln bei einer Weiterleitung von den ausgewählten Datenströmen zugeordneten Datagrammen jeweils eine Zeitverzögerung zwischen einem geplanten Sendezeitpunkt eines Datagramms und seinem tatsächlichen Sendezeitpunkt. Vorzugsweise umfassen die Kommunikationsendgeräte bzw. die Netzinfrastrukturgeräte jeweils einen Zeitmesser, der unabhängig von Zeitmessern anderer Kommunikationsendgeräte bzw. Netzinfrastrukturgeräte ist bzw. nicht mit Zeitmessern anderer Kommunikationsendgeräte bzw. Netzinfrastrukturgeräte synchronisiert wird.

Erfindungsgemäß senden die Netzinfrastrukturgeräte jeweils eine Information über die ermittelte Zeitverzögerung an ein entlang des jeweiligen Pfades nachfolgendes Netzinfrastrukturgerät oder Kommunikationsendgerät. Anhand eines Empfangszeitpunkts der Datagramme und einer durch ein entlang des jeweiligen Pfades vorangehendes Kommunikationsendgerät oder Netzinfrastrukturgerät ermittelten Zeitverzögerung berechnen die Netzinfrastrukturgeräte jeweils den geplanten Sendezeitpunkt. Darüber hinaus wird für eine Übertragung der ausgewählten Datenströme eine akkumulierte maximale Zeitverzögerung zwischen Anfangsknoten und Endknoten des jeweiligen Pfades ermittelt. Vorzugsweise wird die akkumulierte maximale Zeitverzögerung bei einer Reservierung von durch die Netzinfrastrukturgeräte für die Übertragung der ausgewählten Datenströme bereitzustellenden Ressourcen ermittelt.

Zur Synchronisation zwischen Übertragungszyklen von Anfangsknoten-seitigen Steuerungsanwendungen und Übertragungszyklen von Endknoten-seitigen Steuerungsanwendungen wird erfindungsgemäß jeweils anhand der durch das vorangehende Netzinfrastrukturgerät ermittelten Zeitverzögerung, der akkumulierten maximalen Zeitverzögerung und eines Sendezeitpunkts der Datagramme durch die Anfangsknoten-seitige Steuerungsanwendung ein Beginn eines nächsten Endknoten-seitigen Übertragungszyklus ermittelt. Auf diese Weise ist eine relativ einfache Synchronisation einer Gruppe von Endgeräten über einen gemeinsamen Datenstrom möglich, ohne dass separate Synchronisationsprotokolle bzw. -domains erforderlich sind.

Die den ausgewählten Datenströmen zugeordneten Datagramme sind vorteilhafterweise getaggte Ethernet-Datenrahmen. Dabei senden die Netzinfrastrukturgeräte die Information über die ermittelte Zeitverzögerung jeweils in einem Tag des jeweiligen Ethernet-Datenrahmens an das entlang des jeweiligen Pfades nachfolgende Netzinfrastrukturgerät oder Kommunikationsendgerät. Dies ermöglicht eine einfache Implementierung der vorliegenden Erfindung auf Basis bestehender Kommunikationsprotokollelemente. Vorzugsweise senden die Kommunikationsendgeräte an den Anfangsknoten oder die Anfangsknoten-seitigen Steuerungsanwendungen jeweils eine Information über den Sendezeitpunkt der Datagramme durch die jeweilige Anfangsknoten-seitige Steuerungsanwendung in einem Nutzdatenbereich des jeweiligen Datagramms. Darüber hinaus können insbesondere die Kommunikationsendgeräte an den Endknoten oder die Endknoten-seitigen Steuerungsanwendungen jeweils den Beginn des nächsten Endknoten-seitigen Übertragungszyklus ermitteln.

Entsprechend einer bevorzugten Ausgestaltung der vorliegenden Erfindung wird für die Kommunikationsendgeräte an Endknoten und die Netzinfrastrukturgeräte jeweils eine maximale eingangsseitige Zeitverzögerung zwischen dem Empfangszeitpunkt von Datagrammen und dem geplanten Sendezeitpunkt ermittelt oder vorgegeben. In analoger Weise kann auch für die Kommunikationsendgeräte an Anfangsknoten und die Netzinfrastrukturgeräte jeweils eine maximale ausgangsseitige Zeitverzögerung zwischen dem geplanten Sendezeitpunkt von Datagrammen und dem geplanten Sendezeitpunkt ermittelt oder vorgegeben werden. Insbesondere können Datagramme verworfen werden, sobald die maximale eingangs- bzw. ausgangsseitige Zeitverzögerung überschritten wird. Auf diese Weise kann sichergestellt werden, dass für eine Übermittlung nicht mehr aktueller Steuerungs- bzw. Statusdaten keine Systemressourcen allokiert werden.

Darüber hinaus wird für Übertragungsstrecken zwischen Kommunikationsendgeräten bzw. Netzinfrastrukturgeräten vorteilhafterweise jeweils eine maximale Übertragungsverzögerung berechnet, gemessen oder vorgegeben. Dabei ist die akkumulierte maximale Zeitverzögerung vorzugsweise eine Summe über sämtliche maximalen eingangsseitigen Zeitverzögerungen, maximalen ausgangsseitigen Zeitverzögerungen und maximalen Übertragungsverzögerungen entlang eines Pfades für einen ausgewählten Datenstrom. Damit kann der Beginn des jeweils nächsten Endknoten-seitigen Übertragungszyklus effizient und schnell ermittelt werden.

Entsprechend einer weiteren vorteilhaften Ausgestaltung der vorliegenden Erfindung senden die Kommunikationsendgeräte an Anfangsknoten und die Netzinfrastrukturgeräte jeweils eine Information über ihre maximale ausgangsseitige Zeitverzögerung an das entlang des jeweiligen Pfades nachfolgende Netzinfrastrukturgerät oder Kommunikationsendgerät. Damit können die Netzinfrastrukturgeräte den geplanten Sendezeitpunkt aufwandswarm jeweils aus
- dem Empfangszeitpunkt der Datagramme
- zuzüglich der maximalen ausgangsseitigen Zeitverzögerung des vorangehenden Kommunikationsendgeräts oder Netzinfrastrukturgeräts sowie
- der maximalen eingangsseitige Zeitverzögerung und
- abzüglich der durch vorangehende Kommunikationsendgerät oder Netzinfrastrukturgerät ermittelten Zeitverzögerung berechnen.

Insbesondere auf Grundlage vorangehender Ausführungen wird der Beginn des nächsten Endknoten-seitigen Übertragungszyklus vorzugsweise jeweils aus
- dem Sendezeitpunkt der Datagramme durch die jeweilige Anfangsknoten-seitige Steuerungsanwendung
- zuzüglich der akkumulierten maximalen Zeitverzögerung sowie
- der durch das vorangehende Netzinfrastrukturgerät ermittelten Zeitverzögerung und
- abzüglich des Empfangszeitpunkts der Datagramme durch die Kommunikationsendgeräte an den Endknoten sowie
- der maximalen ausgangsseitigen Zeitverzögerung des vorangehenden Netzinfrastrukturgeräts
ermittelt. Vorteilhafterweise senden die Kommunikationsendgeräte an Anfangsknoten und die Netzinfrastrukturgeräte hierzu jeweils eine Information über die maximale ausgangsseitige Zeitverzögerung mittels einer Meldung entsprechend Simple Network Management Protocol an das entlang des jeweiligen Pfades nachfolgende Netzinfrastrukturgerät oder Kommunikationsendgerät. Dies ermöglicht eine schnelle und zuverlässige Ermittlung des Beginns des jeweils nächsten Endknoten-seitigen Übertragungszyklus.

Entsprechend einer weiteren vorteilhaften Ausgestaltung der vorliegenden Erfindung senden die Kommunikationsendgeräte an den Anfangsknoten zur Reservierung von durch die Netzinfrastrukturgeräte bereitzustellenden Ressourcen für eine Übertragung eines Datenstroms erste Nachrichten, in denen jeweils maximale Latenzen umfassende Dienstgüteparameter für den jeweiligen Datenstrom spezifiziert sind. Diese ersten Nachrichten können insbesondere Talker Advertise Meldungen sein. Die Kommunikationsendgeräte an den Endknoten senden für eine Reservierungsanfrage zweite Nachrichten, in denen jeweils ein Datenstrom-Identifikator spezifiziert ist, der dem jeweiligen eine erste Nachricht sendenden Kommunikationsendgerät zugeordnet ist. Diese zweiten Nachrichten können insbesondere Listener Ready Meldungen sein. Für die Übertragung vom Datenströmen reservierte Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges.

Vorzugsweise überprüfen die Netzinfrastrukturgeräte bei einer Reservierungsanfrage anhand der ersten und zweiten Nachrichten jeweils, ob in den Netzinfrastrukturgeräten entlang des jeweiligen Pfades ausreichende Ressourcen zur Übertragung des Datenstroms unter Einhaltung der spezifizierten Dienstgüteparameter verfügbar sind. Bei ausreichenden Ressourcen ermitteln Konfigurationssteuerungseinheiten der Netzinfrastrukturgeräte entlang des Pfades für den Datenstrom jeweils Konfigurationsinformationen und richten das jeweilige Netzinfrastrukturgerät entsprechend den ermittelten Konfigurationsinformationen zur Ressourcen-Bereitstellung für den Datenstrom ein. Somit kann die vorliegende Erfindung mit einem dezentralen Modell zur Ressourcen-Reservierung für Datenströme genutzt werden.

Entsprechend einer alternativen Ausführungsform der vorliegenden Erfindung überprüft eine übergeordnete Kommunikationssteuerungseinrichtung, beispielsweise ein Centralized Network Controller oder eine Network Management Engine, bei einer Reservierungsanfrage anhand der ersten und zweiten Nachrichten jeweils, ob in den Netzinfrastrukturgeräten entlang des jeweiligen Pfades ausreichende Ressourcen zur Übertragung des Datenstroms unter Einhaltung der spezifizierten Dienstgüteparameter verfügbar sind. Bei ausreichenden Ressourcen ermittelt die übergeordnete Kommunikationssteuerungseinrichtung jeweils Konfigurationsinformationen für die Netzinfrastrukturgeräte entlang des Pfades für den Datenstrom und richtet die jeweiligen Netzinfrastrukturgeräte entsprechend den ermittelten Konfigurationsinformationen zur Ressourcen-Bereitstellung für den Datenstrom ein. Auf diese Weise kann die vorliegende Erfindung auch mit einem zentralen Modell zur Ressourcen-Reservierung für Datenströme genutzt werden.

Das erfindungsgemäße Netzinfrastrukturgerät ist zur Durchführung eines Verfahrens entsprechend vorangehenden Ausführungen vorgesehen und umfasst mehrere Anschlüsse zur Verbindung mit weiteren Kommunikationsgeräten sowie ein Koppelelement, durch das die Anschlüsse schaltbar miteinander verbindbar sind. Das Netzinfrastrukturgerät ist dafür ausgestaltet und eingerichtet, bei einer Weiterleitung von ausgewählten Datenströmen zugeordneten Datagrammen jeweils eine Zeitverzögerung zwischen einem geplanten Sendezeitpunkt eines Datagramms und seinem tatsächlichen Sendezeitpunkt zu ermitteln. Dabei sind die ausgewählten Datenströme auf Kommunikationsendgeräten ablaufenden Steuerungsanwendungen zugeordnet. Ferner ist das Netzinfrastrukturgerät dafür ausgestaltet und eingerichtet, jeweils eine Information über die ermittelte Zeitverzögerung an ein entlang eines Pfades für einen ausgewählten Datenstrom nachfolgendes Netzinfrastrukturgerät oder Kommunikationsendgerät zu senden. Darüber hinaus ist das Netzinfrastrukturgerät dafür ausgestaltet und eingerichtet, den geplanten Sendezeitpunkt jeweils anhand eines Empfangszeitpunkts der Datagramme und einer durch ein entlang des jeweiligen Pfades vorangehendes Kommunikationsendgerät oder durch ein Netzinfrastrukturgerät ermittelten Zeitverzögerung zu berechnen.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationsnetz für ein industrielles Automatisierungssystem,
- Figur 2: eine schematische Darstellung einer Übermittlung von Datenströmen und Synchronisierungsinformationen zwischen Kommunikationsgeräten an Zwischenknoten des Kommunikationsnetzes gemäß Figur 1,
- Figur 3: eine schematische Darstellung einer Übermittlung von Datenströmen und Synchronisierungsinformationen an ein Kommunikationsgerät an einem Endknoten des Kommunikationsnetzes gemäß Figur 1.

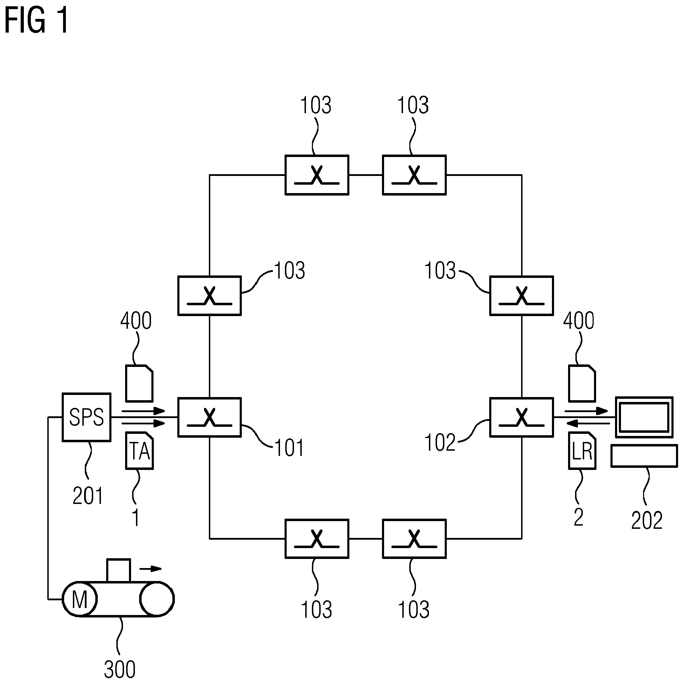

Das in Figur 1 dargestellte Kommunikationsnetz für ein industrielles Automatisierungssystem umfasst mehrere Kommunikationsgeräte, insbesondere Netzinfrastrukturgeräte 101-103 und in Automatisierungsgeräte 201-202 integrierte Kommunikationsendgeräte. Die Netzinfrastrukturgeräte 101-103 können beispielsweise Bridges, Switches oder Router sein und zum Anschluss von Automatisierungsgeräten, wie speicherprogrammierbaren Steuerungen 201, Eingabe/Ausgabe-Einheiten (I/O-Module) oder Bedien- und Beobachtungsstationen 202, dienen. Im vorliegenden Ausführungsbeispiel ist das die Netzinfrastrukturgeräte 101-103 umfassende Kommunikationsnetz als Time-sensitive Network ausgestaltet, insbesondere entsprechend IEEE 802.1Q, IEEE 802.1AB, IEEE 802.1AS, IEEE 802.1BA bzw. IEEE 802.1CB.

Speicherprogrammierbare Steuerungen 201 umfassen typischerweise jeweils ein Kommunikationsmodul, eine Zentraleinheit sowie zumindest eine Eingabe/Ausgabe-Einheit dar. Eingabe/ Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul ist eine speicherprogrammierbare Steuerung 201 beispielsweise mit einem Switch oder Router oder zusätzlich mit einem Feldbus verbunden. Die Eingabe/AusgabeEinheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 300. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind im vorliegenden Ausführungsbeispiel über ein Rückwandbus-System miteinander verbunden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

Mittels erster Automatisierungsgeräte, die an Anfangsknoten angeschlossene Kommunikationsendgeräte darstellen und eine Talker-Funktion haben, werden Informationen bzw. Dienste über Datenströme zur Nutzung an zweiten Automatisierungsgeräten bereitgestellt, die an Endknoten angeschlossene Kommunikationsendgeräte darstellen und eine Listener-Funktion haben. Einem Automatisierungsgerät kann gleichzeitig sowohl eine Talker-Funktion als auch eine Listener-Funktion haben, beispielsweise wenn es einerseits Automatisierungsdienste bereitstellt und andererseits Automatisierungsdienste anderer Geräte nutzt.

Im vorliegenden Ausführungsbeispiel hat die speicherprogrammierbare Steuerung 201 eine Talker-Funktion, während die Bedien- und Beobachtungsstation 202 eine Listener-Funktion aufweist und insbesondere durch die speicherprogrammierbare Steuerung 201 bereitgestellte Informationen empfängt. Grundsätzlich könnte die Bedien- und Beobachtungsstation 202 von der speicherprogrammierbaren Steuerung 201 empfangene Informationen analysieren und hieraus Steuerungsparameter für die speicherprogrammierbare Steuerung 201 vorgeben. Somit würden sowohl die speicherprogrammierbare Steuerung 201 als auch die Bedien- und Beobachtungsstation beide Funktionen wahrnehmen. Im Sinn einer vereinfachten Darstellung wird nachfolgend davon ausgegangen, dass beide Geräte jeweils nur eine zugeordnete Funktion aufweisen.

Im vorliegenden Ausführungsbeispiel ausgewählte Datagramme 400 werden als Datenströme von Kommunikationsendgeräten 201 an Anfangsknoten zu Kommunikationsendgeräten 202 an Endknoten über Netzinfrastrukturgeräte 101-103 an Zwischenknoten übermittelt. Dabei umfassen die Kommunikationsendgeräte 201-202 und die Netzinfrastrukturgeräte 101-103 jeweils einen Zeitmesser, der unabhängig von Zeitmessern anderer Kommunikationsendgeräte bzw. Netzinfrastrukturgeräte ist und nicht mit Zeitmessern anderer Kommunikationsendgeräte bzw. Netzinfrastrukturgeräte synchronisiert wird.

Zur Reservierung von durch die Netzinfrastrukturgeräte 101-103 bereitzustellenden Ressourcen spezifizieren die Kommunikationsendgeräte an den Anfangsknoten, beispielsweise die speicherprogrammierbare Steuerung 201, im Rahmen einer Datenstrom-Anmeldung mittels Talker Advertise Meldungen 1 jeweils Dienstgüteparameter für die Datenströme. Diese Dienstgüteparameter umfassen insbesondere für den jeweiligen Datenstrom spezifizierte maximale Latenzen. Die durch die Netzinfrastrukturgeräte 101-103 bereitzustellenden Ressourcen umfassen beispielsweise nutzbare Übertragungszeitfenster, Bandbreite, zugesicherte maximale Latenz, Queue-Anzahl, Queue-Cache bzw. Adress-Cache in Switches oder Bridges. Bei erfolgreicher Datenstrom-Anmeldung bzw. grundsätzlicher Erfüllbarkeit spezifizierter Dienstgüte-Anforderungen erfolgt jeweils eine Zuordnung eines Datenstrom-Identifikators. Für eine Reservierungsanfrage spezifizieren die Kommunikationsendgeräte an den Endknoten, beispielsweise die Bedien- und Beobachtungsstation 202, einen jeweiligen Datenstrom-Identifikator und senden hierzu Listener Ready Meldungen 2.

Entsprechend einem dezentralen Ansatz zur Reservierung von Ressourcen zur Übermittlung von Datenströmen überprüft jedes Netzinfrastrukturgerät 101-103 entlang eines Pfads für einen Datenstrom anhand der Dienstgüteparameter bei einer Reservierungsanfrage jeweils, ob im jeweiligen Netzinfrastrukturgerät ausreichende Ressourcen zur Datenübermittlung unter Einhaltung der spezifizierten Dienstgüteparameter verfügbar sind. Eine zentrale Instanz zur Ressourcenverwaltung oder Pfadermittlung ist mit dem dezentralen Ansatz zur Ressourcen-Reservierung für Datenströme nicht erforderlich. Die Pfade für die Datenströme können beispielsweise mittels Shortest Path Bridging entsprechend IEEE 802.1aq ermittelt werden. Bei ausreichenden Ressourcen wird jeweils einem dem spezifizierten Datenstrom-Identifikator zugeordnete Datenstrom-Multicast-Adresse an ein anfragendes Kommunikationsendgerät an einem Endknoten übermittelt. Außerdem ermitteln Konfigurationssteuerungseinheiten der Kommunikationsgeräte entlang eines Pfads für einen Datenstrom bei ausreichenden Ressourcen jeweils Konfigurationsinformationen und richten das jeweilige Netzinfrastrukturgerät entsprechend den ermittelten Konfigurationsinformationen zur Ressourcen-Bereitstellung für die Datenströme ein.

Dagegen überprüft eine übergeordnete Kommunikationssteuerungseinrichtung bei einer Reservierungsanfrage entsprechend einem zentralen Ansatz zur Reservierung von Ressourcen anhand der Talker Advertise Meldungen 1 und der Listener Ready Meldungen 2 jeweils, ob in den Netzinfrastrukturgeräten 101-103 entlang des jeweiligen Pfades ausreichende Ressourcen zur Übertragung des Datenstroms unter Einhaltung der spezifizierten Dienstgüteparameter verfügbar sind. Bei ausreichenden Ressourcen ermittelt die übergeordnete Kommunikationssteuerungseinrichtung jeweils Konfigurationsinformationen für die Netzinfrastrukturgeräte 101-103 entlang des Pfades für den Datenstrom und richtet die jeweiligen Netzinfrastrukturgeräte entsprechend den ermittelten Konfigurationsinformationen zur Ressourcen-Bereitstellung für den Datenstrom ein.

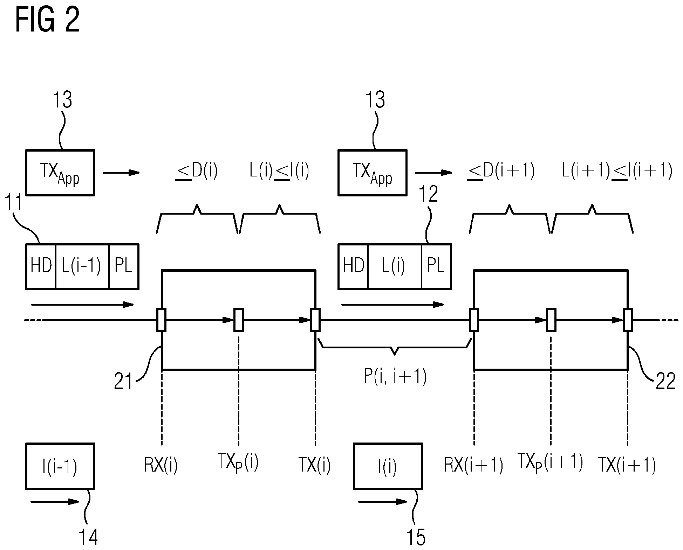

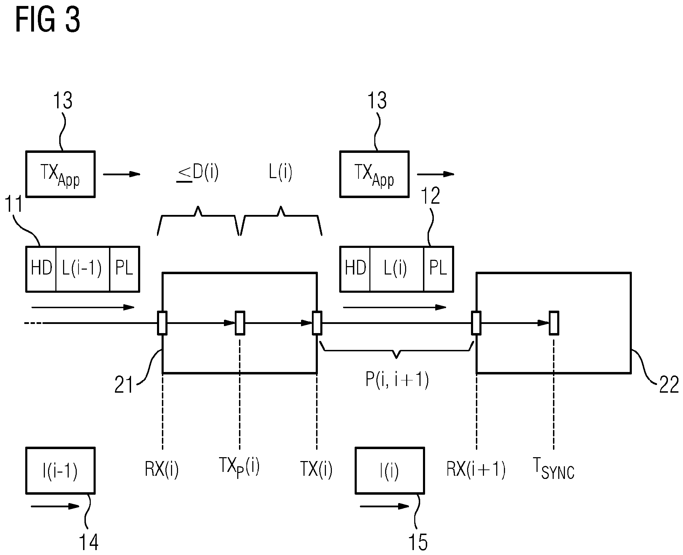

Zur Synchronisation von auf Kommunikationsend- bzw. Automatisierungsgeräten 201-202 ablaufenden Steuerungsanwendungen werden ausgewählte Datenströme genutzt, die den Steuerungsanwendungen zugeordnet sind. Entsprechend Figur 2 und 3 ermitteln die Netzinfrastrukturgeräte 101-103 bei einer Weiterleitung von den ausgewählten Datenströmen zugeordneten Datagrammen 11-12 innerhalb eines jeweiligen Zeitfensters 21, 22 jeweils eine Zeitverzögerung L(i), L(i+1) zwischen einem geplanten Sendezeitpunkt TX_{P}(i), TX_{P}(i+1) eines Datagramms 11, 12 und seinem tatsächlichen Sendezeitpunkt TX(i), TX(i+1). Die Netzinfrastrukturgeräte 101-103 senden jeweils eine Information über die ermittelte Zeitverzögerung L(i), L(i+1) an ein entlang des jeweiligen Pfades nachfolgendes Netzinfrastrukturgerät 101-103 oder Kommunikationsendgerät 202. Dabei berechnen die Netzinfrastrukturgeräte 101-103 den geplanten Sendezeitpunkt TX_{P}(i), TX_{P}(i+1) jeweils anhand eines Empfangszeitpunkts RX(i), RX(i+1) der Datagramme 11-12 und anhand einer durch ein entlang des jeweiligen Pfades vorangehendes Kommunikationsendgerät 201 oder Netzinfrastrukturgerät 101-103 ermittelten Zeitverzögerung L(i-1), L(i).

Vorzugsweise sind die den ausgewählten Datenströmen zugeordneten Datagramme 11-12 getaggte Ethernet-Datenrahmen, die neben einem Header HD und einem Nutzdaten-Block PL Tag-Felder umfassen. Die Netzinfrastrukturgeräte 101-103 senden die Information über die ermittelte Zeitverzögerung L(i), L(i+1) jeweils in einem Tag des jeweiligen Ethernet-Datenrahmens an das entlang des jeweiligen Pfades nachfolgende Netzinfrastrukturgerät 101-103 (siehe Figur 2) oder Kommunikationsendgerät 202 (siehe Figur 3).

Darüber hinaus wird im vorliegenden Ausführungsbeispiel bei einer Reservierung von durch die Netzinfrastrukturgeräte 101-103 für eine Übertragung der ausgewählten Datenströme bereitzustellenden Ressourcen eine akkumulierte maximale Zeitverzögerung D_{MAX} für die Übertragung der ausgewählten Datenströme ermittelt. Zur Synchronisation zwischen Übertragungszyklen von Anfangsknoten-seitigen Steuerungsanwendungen und Übertragungszyklen von Endknoten-seitigen Steuerungsanwendungen ermittelt das jeweilige Kommunikationsend- bzw. Automatisierungsgerät 202 an einem Endknoten oder die jeweilige Endknoten-seitige Steuerungsanwendung jeweils anhand
- der durch das vorangehende Netzinfrastrukturgerät 101-103 ermittelten Zeitverzögerung L(i),
- der akkumulierten maximalen Zeitverzögerung D_{MAX} und
- eines Sendezeitpunkts TX_{APP} der Datagramme 11-12 durch die Anfangsknoten-seitige Steuerungsanwendung
einen Beginn (T_{SYNC}) eines nächsten Endknoten-seitigen Übertragungszyklus (siehe Figur 3). Das jeweilige Kommunikationsend- bzw. Automatisierungsgerät 201 an einem Anfangsknoten oder die Anfangsknoten-seitigen Steuerungsanwendung kann hierzu beispielsweise jeweils eine Information über den Sendezeitpunkt TX_{APP} der Datagramme 11-12 durch die jeweilige Anfangsknoten-seitige Steuerungsanwendung in einem Nutzdaten-Block PL des jeweiligen Datagramms 11, 12 oder in einer separaten Meldung 13 senden.

Vorzugsweise wird für die Kommunikationsendgeräte an Endknoten und die Netzinfrastrukturgeräte jeweils eine maximale eingangsseitige Zeitverzögerung D(i), D(i+1) zwischen dem Empfangszeitpunkt RX(i), RX(i+1) von Datagrammen 11-12 und dem geplanten Sendezeitpunkt TX_{P}(i), TX_{P}(i+1) ermittelt oder vorgegeben. Analog dazu wird vorteilhafterweise für die Kommunikationsendgeräte an Anfangsknoten und die Netzinfrastrukturgeräte jeweils eine maximale ausgangsseitige Zeitverzögerung I(i), I(i+1) zwischen dem geplanten Sendezeitpunkt TX_{P}(i), TX_{P}(i+1) von Datagrammen 11-12 und dem tatsächlichen Sendezeitpunkt TX(i), TX(i+1) ermittelt oder vorgegeben. Darüber hinaus wird im vorliegenden Ausführungsbeispiel für Übertragungsstrecken zwischen Kommunikationsendgeräten bzw. Netzinfrastrukturgeräten jeweils eine maximale Übertragungsverzögerung P(i,i+1) berechnet, gemessen oder vorgegeben. Mit diesen Vorgaben kann die akkumulierte maximale Zeitverzögerung D_{MAX} als Summe über sämtliche maximalen eingangsseitigen Zeitverzögerungen D(i), maximalen ausgangsseitigen Zeitverzögerungen I(i) und maximalen Übertragungsverzögerungen P(i,i+1) entlang eines Pfades für einen ausgewählten Datenstrom berechnet werden. Vorteilhafterweise senden die Kommunikationsendgeräte an Anfangsknoten und die Netzinfrastrukturgeräte jeweils eine Information über die maximale ausgangsseitige Zeitverzögerung I(i-1), I(i) mittels einer Meldung 14, 15 entsprechend Simple Network Management Protocol (SNMP) an das entlang des jeweiligen Pfades nachfolgende Netzinfrastrukturgerät oder Kommunikationsendgerät.

Im vorliegenden Ausführungsbeispiel senden die Kommunikationsendgeräte an Anfangsknoten und die Netzinfrastrukturgeräte jeweils eine Meldung 14, 15 mit ihrer maximalen ausgangsseitige Zeitverzögerung I(i-1), I(i) an das entlang des jeweiligen Pfades nachfolgende Netzinfrastrukturgerät oder Kommunikationsendgerät. Damit berechnen die Netzinfrastrukturgeräte den geplanten Sendezeitpunkt TX_{P}(i), TX_{P}(i+1) jeweils aus
- dem Empfangszeitpunkt RX(i), RX(i+1) der Datagramme 11, 12
- plus der maximalen ausgangsseitigen Zeitverzögerung I(i-1), L(i) des vorangehenden Kommunikationsendgeräts oder Netzinfrastrukturgeräts sowie
- plus der maximalen eingangsseitige Zeitverzögerung D(i), D(i+1) und
- minus der durch vorangehende Kommunikationsendgerät oder Netzinfrastrukturgerät ermittelten Zeitverzögerung L(i-1), L(i) .

Der Beginn T_{SYNC} des nächsten Endknoten-seitigen Übertragungszyklus kann auf Grundlage obiger Ausführungen jeweils aus
- dem Sendezeitpunkt TX_{APP} der Datagramme 11, 12 durch die jeweilige Anfangsknoten-seitige Steuerungsanwendung
- plus der akkumulierten maximalen Zeitverzögerung D_{MAX} sowie
- plus der durch das vorangehende Netzinfrastrukturgerät ermittelten Zeitverzögerung L(i-1), L(i) und
- minus des Empfangszeitpunkts der Datagramme RX(i), RX(i+1) durch die Kommunikationsendgeräte an den Endknoten sowie
- minus der maximalen ausgangsseitigen Zeitverzögerung I(i-1), I(i) des vorangehenden Netzinfrastrukturgeräts ermittelt werden.

## Patentansprüche

1. Verfahren zur Synchronisation von Steuerungsanwendungen über ein Kommunikationsnetz zur Übermittlung zeitkritischer Daten, bei dem
- das Kommunikationsnetz Kommunikationsendgeräte (201-203) an Anfangs- und Endknoten von Pfaden für Datenströme und Netzinfrastrukturgeräte (101-110) an Zwischenknoten umfasst, wobei ausgewählte Datenströme auf Kommunikationsendgeräten (201, 202) ablaufenden Steuerungsanwendungen zugeordnet sind,
- die Netzinfrastrukturgeräte bei einer Weiterleitung von den ausgewählten Datenströmen zugeordneten Datagrammen (11-12) jeweils eine Zeitverzögerung (L(i)) zwischen einem geplanten Sendezeitpunkt (TX_{P}(i)) eines Datagramms und seinem tatsächlichen Sendezeitpunkt (TX(i)) ermitteln,
- die Netzinfrastrukturgeräte jeweils eine Information über die ermittelte Zeitverzögerung an ein entlang des jeweiligen Pfades nachfolgendes Netzinfrastrukturgerät oder Kommunikationsendgerät senden,
- die Netzinfrastrukturgeräte den geplanten Sendezeitpunkt (TX_{P}(i)) jeweils anhand eines Empfangszeitpunkts (RX(i)) der Datagramme und einer durch ein entlang des jeweiligen Pfades vorangehendes Kommunikationsendgerät oder Netzinfrastrukturgerät ermittelten Zeitverzögerung (L(i-1)) berechnen,
- eine akkumulierte maximale Zeitverzögerung (D_{MAX}) zwischen Anfangsknoten und Endknoten für eine Übertragung der ausgewählten Datenströme ermittelt wird,
- zur Synchronisation zwischen Übertragungszyklen von Anfangsknoten-seitigen Steuerungsanwendungen und Übertragungszyklen von Endknoten-seitigen Steuerungsanwendungen jeweils anhand der durch das vorangehende Netzinfrastrukturgerät ermittelten Zeitverzögerung, der akkumulierten maximalen Zeitverzögerung und eines Sendezeitpunkts (TX_{APP}) der Datagramme durch die Anfangsknoten-seitige Steuerungsanwendung ein Beginn (T_{SYNC}) eines nächsten Endknoten-seitigen Übertragungszyklus ermittelt wird.

2. Verfahren nach Anspruch 1,
bei dem die Kommunikationsendgeräte und/oder die Netzinfrastrukturgeräte jeweils einen Zeitmesser umfassen, der unabhängig von Zeitmessern anderer Kommunikationsendgeräte und/oder Netzinfrastrukturgeräte ist und/oder nicht mit Zeitmessern anderer Kommunikationsendgeräte und/oder Netzinfrastrukturgeräte synchronisiert wird.

3. Verfahren nach einem der Ansprüche 1 oder 2,
bei dem die akkumulierte maximale Zeitverzögerung (D_{MAX}) bei einer Reservierung von durch die Netzinfrastrukturgeräte für die Übertragung der ausgewählten Datenströme bereitzustellenden Ressourcen ermittelt wird.

4. Verfahren nach einem der Ansprüche 1 bis 3,
bei dem für die Kommunikationsendgeräte an Endknoten und die Netzinfrastrukturgeräte jeweils eine maximale eingangsseitige Zeitverzögerung (D(i)) zwischen dem Empfangszeitpunkt von Datagrammen und dem geplanten Sendezeitpunkt ermittelt oder vorgegeben wird,
bei dem für die Kommunikationsendgeräte an Anfangsknoten und die Netzinfrastrukturgeräte jeweils eine maximale ausgangsseitige Zeitverzögerung (I(i)) zwischen dem geplanten Sendezeitpunkt von Datagrammen und dem Sendezeitpunkt ermittelt oder vorgegeben wird,
bei dem für Übertragungsstrecken zwischen Kommunikationsendgeräten und/oder Netzinfrastrukturgeräten jeweils eine maximale Übertragungsverzögerung (P(i,i+1)) berechnet, gemessen oder vorgegeben wird und
bei dem die akkumulierte maximale Zeitverzögerung (D_{MAX}) eine Summe über sämtliche maximalen eingangsseitigen Zeitverzögerungen (D(i)), maximalen ausgangsseitigen Zeitverzögerungen (I(i)) und maximalen Übertragungsverzögerungen (P(i,i+1)) entlang eines Pfades für einen ausgewählten Datenstrom ist.

5. Verfahren nach Anspruch 4,
bei dem die Kommunikationsendgeräte an Anfangsknoten und die Netzinfrastrukturgeräte jeweils eine Information über ihre maximale ausgangsseitige Zeitverzögerung (I(i)) an das entlang des jeweiligen Pfades nachfolgende Netzinfrastrukturgerät oder Kommunikationsendgerät senden und
bei dem die Netzinfrastrukturgeräte den geplanten Sendezeitpunkt (TX_{P}(i)) jeweils aus
- dem Empfangszeitpunkt (RX(i)) der Datagramme
- zuzüglich der maximalen ausgangsseitigen Zeitverzögerung (I(i-1)) des vorangehenden Kommunikationsendgeräts oder Netzinfrastrukturgeräts sowie
- der maximalen eingangsseitige Zeitverzögerung (D(i)) und
- abzüglich der durch vorangehende Kommunikationsendgerät oder Netzinfrastrukturgerät ermittelten Zeitverzögerung (L(i-1))
berechnen.

6. Verfahren nach einem der Ansprüche 3 bis 5,
bei dem der Beginn (T_{SYNC}) des nächsten Endknoten-seitigen Übertragungszyklus jeweils aus
- dem Sendezeitpunkt (TX_{APP}) der Datagramme durch die jeweilige Anfangsknoten-seitige Steuerungsanwendung
- zuzüglich der akkumulierten maximalen Zeitverzögerung (D_{MAX}) sowie
- der durch das vorangehende Netzinfrastrukturgerät ermittelten Zeitverzögerung (L(i-1)) und
- abzüglich des Empfangszeitpunkts der Datagramme (RX(i)) durch die Kommunikationsendgeräte an den Endknoten sowie
- der maximalen ausgangsseitigen Zeitverzögerung (I(i-1)) des vorangehenden Netzinfrastrukturgeräts
ermittelt wird.

7. Verfahren nach einem der Ansprüche 3 bis 6,
bei dem die Kommunikationsendgeräte an Anfangsknoten und die Netzinfrastrukturgeräte jeweils eine Information über die maximale ausgangsseitige Zeitverzögerung (I(i-1)) mittels einer Meldung entsprechend Simple Network Management Protocol an das entlang des jeweiligen Pfades nachfolgende Netzinfrastrukturgerät oder Kommunikationsendgerät senden.

8. Verfahren nach einem der Ansprüche 1 bis 7,
bei dem die den ausgewählten Datenströmen zugeordneten Datagramme getaggte Ethernet-Datenrahmen sind und bei dem die Netzinfrastrukturgeräte die Information über die ermittelte Zeitverzögerung jeweils in einem Tag des jeweiligen Ethernet-Datenrahmens an das entlang des jeweiligen Pfades nachfolgende Netzinfrastrukturgerät oder Kommunikationsendgerät senden.

9. Verfahren nach einem der Ansprüche 1 bis 8,
bei dem die Kommunikationsendgeräte an den Anfangsknoten oder die Anfangsknoten-seitigen Steuerungsanwendungen jeweils eine Information über den Sendezeitpunkt (TX_{APP}) der Datagramme durch die jeweilige Anfangsknoten-seitige Steuerungsanwendung in einem Nutzdatenbereich des jeweiligen Datagramms senden.

10. Verfahren nach einem der Ansprüche 1 bis 9,
bei dem die Kommunikationsendgeräte an den Endknoten oder die Endknoten-seitigen Steuerungsanwendungen jeweils den Beginn (T_{SYNC}) des nächsten Endknoten-seitigen Übertragungszyklus ermitteln.

11. Verfahren nach einem der Ansprüche 1 bis 10,
bei dem die Kommunikationsendgeräte an den Anfangsknoten zur Reservierung von durch die Netzinfrastrukturgeräte bereitzustellenden Ressourcen für eine Übertragung eines Datenstroms erste Nachrichten (1), insbesondere Talker Advertise Meldungen, senden, in denen jeweils maximale Latenzen umfassende Dienstgüteparameter für den jeweiligen Datenstrom spezifiziert sind, und
bei dem die Kommunikationsendgeräte an den Endknoten für eine Reservierungsanfrage zweite Nachrichten (2), insbesondere Listener Ready Meldungen, senden, in denen jeweils ein Datenstrom-Identifikator spezifiziert ist, der dem jeweiligen eine erste Nachricht sendenden Kommunikationsendgerät zugeordnet ist.

12. Verfahren nach Anspruch 11,
bei dem die Netzinfrastrukturgeräte bei einer Reservierungsanfrage anhand der ersten und zweiten Nachrichten jeweils überprüfen, ob in den Netzinfrastrukturgeräten entlang des jeweiligen Pfades ausreichende Ressourcen zur Übertragung des Datenstroms unter Einhaltung der spezifizierten Dienstgüteparameter verfügbar sind, und
bei dem Konfigurationssteuerungseinheiten der Netzinfrastrukturgeräte entlang des Pfades für den Datenstrom bei ausreichenden Ressourcen jeweils Konfigurationsinformationen ermitteln und das jeweilige Netzinfrastrukturgerät entsprechend den ermittelten Konfigurationsinformationen zur Ressourcen-Bereitstellung für den Datenstrom einrichten.

13. Verfahren nach Anspruch 11,
bei dem eine übergeordnete Kommunikationssteuerungseinrichtung bei einer Reservierungsanfrage anhand der ersten und zweiten Nachrichten jeweils überprüft, ob in den Netzinfrastrukturgeräten entlang des jeweiligen Pfades ausreichende Ressourcen zur Übertragung des Datenstroms unter Einhaltung der spezifizierten Dienstgüteparameter verfügbar sind, und bei dem die übergeordnete Kommunikationssteuerungseinrichtung bei ausreichenden Ressourcen jeweils Konfigurationsinformationen für die Netzinfrastrukturgeräte entlang des Pfades für den Datenstrom ermittelt und die jeweiligen Netzinfrastrukturgeräte entsprechend den ermittelten Konfigurationsinformationen zur Ressourcen-Bereitstellung für den Datenstrom einrichtet.

14. Verfahren nach einem der Ansprüche 11 bis 13,
bei dem für die Übertragung vom Datenströmen reservierte Ressourcen nutzbare Übertragungszeitfenster, Bandbreite, zugesicherte maximale Latenz, Queue-Anzahl, Queue-Cache und/oder Adress-Cache in Switches oder Bridges umfassen.

15. Netzinfrastrukturgerät zur Durchführung eines Verfahrens nach einem der Ansprüche 1 bis 14 mit
- mehreren Anschlüssen zur Verbindung mit weiteren Kommunikationsgeräten,
- einem Koppelelement, durch das die Anschlüsse schaltbar miteinander verbindbar sind,
- wobei das Netzinfrastrukturgerät dafür ausgestaltet und eingerichtet ist, bei einer Weiterleitung von ausgewählten Datenströmen zugeordneten Datagrammen (11-12) jeweils eine Zeitverzögerung (L(i)) zwischen einem geplanten Sendezeitpunkt (TX_{P}(i)) eines Datagramms und seinem tatsächlichen Sendezeitpunkt (TX(i)) zu ermitteln, wobei die ausgewählten Datenströme auf Kommunikationsendgeräten (201, 202) ablaufenden Steuerungsanwendungen zugeordnet sind,
- wobei das Netzinfrastrukturgerät ferner dafür ausgestaltet und eingerichtet ist, jeweils eine Information über die ermittelte Zeitverzögerung an ein entlang eines Pfades für einen ausgewählten Datenstrom nachfolgendes Netzinfrastrukturgerät oder Kommunikationsendgerät zu senden,
- wobei das Netzinfrastrukturgerät ferner dafür ausgestaltet und eingerichtet ist, den geplanten Sendezeitpunkt (TX_{P}(i)) jeweils anhand eines Empfangszeitpunkts der Datagramme (RX(i)) und einer durch ein entlang des jeweiligen Pfades vorangehendes Kommunikationsendgerät oder Netzinfrastrukturgerät ermittelten Zeitverzögerung (L(i-1)) zu berechnen.

## Claims

1. Method for synchronizing control applications via a communication network for transferring time-critical data, in which
- the communication network comprises communication terminals (201-203) at starting and end nodes of paths for data streams and network infrastructure devices (101-110) at intermediate nodes, selected data streams being associated with control applications running on communication terminals (201, 202),
- the network infrastructure devices ascertain a particular time delay (L(i)) between a scheduled time of transmission (TX_{P}(i)) for a datagram and its actual time of transmission (TX(i)) when forwarding datagrams (11-12) associated with the selected data streams,
- the network infrastructure devices send particular information about the ascertained time delay to a network infrastructure device or communication terminal that is subsequent along the respective path,
- the network infrastructure devices compute the scheduled time of transmission (TX_{P}(i)) on the basis of a particular time of reception (RX(i)) of the datagrams and a time delay (L(i-1)) ascertained by a communication terminal or network infrastructure device that is precedent along the respective path,
- an accumulated maximum time delay (D_{MAX}) between starting nodes and end nodes is ascertained for a transmission of the selected data streams,
- synchronization between transmission cycles of starting-node control applications and transmission cycles of end-node control applications is achieved by virtue of the starting-node control application taking the time delay ascertained by the precedent network infrastructure device, the accumulated maximum time delay and a time of transmission (TX_{APP}) of the datagrams as a basis for ascertaining a particular start (T_{SYNC}) of a next end-node transmission cycle.

2. Method according to Claim 1,
in which the communication terminals and/or the network infrastructure devices each comprise a timer, which is independent of timers of other communication terminals and/or network infrastructure devices and/or is not synchronized to timers of other communication terminals and/or network infrastructure devices.

3. Method according to either of Claims 1 and 2,
in which the accumulated maximum time delay (D_{MAX}) is ascertained for a reservation of resources to be provided by the network infrastructure devices for the transmission of the selected data streams.

4. Method according to one of Claims 1 to 3,
in which a particular maximum input-side time delay (D(i)) between the time of reception of datagrams and the scheduled time of transmission is ascertained or predefined for the communication terminals at end nodes and the network infrastructure devices,
in which a particular maximum output-side time delay (I(i)) between the scheduled time of transmission of datagrams and the time of transmission is ascertained or predefined for the communication terminals at starting nodes and the network infrastructure devices,
in which a particular maximum transmission delay (P(i,i+1)) is computed, measured or predefined for transmission links between communication terminals and/or network infrastructure devices, and
in which the accumulated maximum time delay (D_{MAX}) is a sum of all maximum input-side time delays (D(i)), maximum output-side time delays (I(i)) and maximum transmission delays (P(i,i+1)) along a path for a selected data stream.

5. Method according to Claim 4,
in which the communication terminals at starting nodes and the network infrastructure devices send particular information about their maximum output-side time delay (I(i)) to the network infrastructure device or communication terminal that is subsequent along the respective path and
in which the network infrastructure devices compute the particular scheduled time of transmission (TX_{P}(i)) from
- the time of reception (RX(i)) of the datagrams
- plus the maximum output-side time delay (I(i-1)) of the precedent communication terminal or network infrastructure device and
- the maximum input-side time delay (D(i)) and
- minus the time delay (L(i-1)) ascertained by the precedent communication terminal or network infrastructure device.

6. Method according to one of Claims 3 to 5,
in which the particular start (T_{SYNC}) of the next end-node transmission cycle is ascertained from
- the time of transmission (TX_{APP}) of the datagrams by the respective starting-node control application
- plus the accumulated maximum time delay (D_{MAX}) and
- the time delay (L(i-1)) ascertained by the precedent network infrastructure device and
- minus the time of reception of the datagrams (RX(i)) by the communication terminals at the end nodes and
- the maximum output-side time delay (I(i-1)) of the precedent network infrastructure device.

7. Method according to one of Claims 3 to 6,
in which the communication terminals at starting nodes and the network infrastructure devices send particular information about the maximum output-side time delay (I(i-1)) to the network infrastructure device or communication terminal that is subsequent along the respective path by means of a message based on the Simple Network Management Protocol.

8. Method according to one of Claims 1 to 7,
in which the datagrams associated with the selected data streams are tagged Ethernet data frames and in which the network infrastructure devices send the information about the ascertained time delay to the network infrastructure device or communication terminal that is subsequent along the respective path in a particular tag of the respective Ethernet data frame.

9. Method according to one of Claims 1 to 8,
in which the communication terminals at the starting nodes or the starting-node control applications send particular information about the time of transmission (TX_{APP}) of the datagrams by the respective starting-node control application in a payload area of the respective datagram.

10. Method according to one of Claims 1 to 9,
in which the communication terminals at the end nodes or the end-node control applications ascertain the particular start (T_{SYNC}) of the next end-node transmission cycle.

11. Method according to one of Claims 1 to 10,
in which the communication terminals at the starting nodes reserve resources to be provided by the network infrastructure devices for a transmission of a data stream by sending first messages (1), in particular Talker Advertise messages, which specify particular quality of service parameters for the respective data stream, said quality of service parameters comprising maximum latencies, and
in which the communication terminals at the end nodes send second messages (2), in particular Listener Ready messages, for a reservation request, which second messages specify a particular data stream identifier associated with the respective communication terminal sending a first message.

12. Method according to Claim 11,
in which, for a particular reservation request on the basis of the first and second messages, the network infrastructure devices check whether the network infrastructure devices along the respective path have sufficient resources available for transmitting the data stream while adhering to the specified quality of service parameters, and
in which, if there are sufficient resources, configuration control units of the network infrastructure devices along the path ascertain particular configuration information for the data stream and configure the respective network infrastructure device to provide resources for the data stream in accordance with the ascertained configuration information.

13. Method according to Claim 11,
in which, for a particular reservation request on the basis of the first and second messages, a superordinate communication control device checks whether the network infrastructure devices along the respective path have sufficient resources available for transmitting the data stream while adhering to the specified quality of service parameters, and
in which, if there are sufficient resources, the superordinate communication control device ascertains particular configuration information for the network infrastructure devices along the path for the data stream and configures the respective network infrastructure devices to provide resources for the data stream in accordance with the ascertained configuration information.

14. Method according to one of Claims 11 to 13,
in which resources reserved for the transmission of the data streams include usable transmission time windows, bandwidth, assured maximum latency, number of queues, queue cache and/or address cache in switches or bridges.

15. Network infrastructure device for carrying out a method according to one of Claims 1 to 14, having
- multiple connections for connection to further communication devices,
- a coupling element by way of which the connections are switchably connectable to one another,
- wherein the network infrastructure device is arranged and configured to ascertain a particular time delay (L(i)) between a scheduled time of transmission (TX_{P}(i)) for a datagram and its actual time of transmission (TX(i)) when forwarding datagrams (11-12) associated with selected data streams, the selected data streams being associated with control applications running on communication terminals (201, 202),
- wherein the network infrastructure device is furthermore arranged and configured to send particular information about the ascertained time delay to a network infrastructure device or communication terminal that is subsequent along a path for a selected data stream,
- wherein the network infrastructure device is furthermore arranged and configured to compute the scheduled time of transmission (TX_{P}(i)) on the basis of a particular time of reception of the datagrams (RX(i)) and a time delay (L(i-1)) ascertained by a communication terminal or network infrastructure device that is precedent along the respective path.

## Revendications

1. Procédé de synchronisation d'applications de commande sur un réseau de communication pour la transmission de données critiques temporellement, dans lequel
- le réseau de communication comprend des terminaux (201-203) de communication à des noeuds de début et de fin de chemins pour des flux de données et des appareils (101-110) d'infrastructure de réseau à des noeuds intermédiaires, dans lequel des flux de données sélectionnés sont associés à des applications de commande se déroulant sur des terminaux (201, 202) de communication,
- les appareils d'infrastructure de réseau déterminent, lors d'un acheminement de datagrammes (11-12) associés aux flux de données sélectionnés, respectivement un retard (L(i)) dans le temps entre un instant (TX_{P}(i)) d'envoi planifié d'un datagramme et son instant (TX(i)) d'envoi réel,
- les appareils d'infrastructure de réseau envoient respectivement une information sur le retard dans le temps, qui a été déterminé, à un appareil d'infrastructure de réseau venant ensuite le long du chemin respectif ou à un terminal de communication,
- les appareils d'infrastructure de réseau calculent l'instant (TX_{P}(i)) d'envoi planifié respectivement à l'aide d'un instant (RX(i)) de réception des datagrammes et d'un retard (L(i-1)) temporel déterminé par un terminal de communication ou un appareil d'infrastructure de réseau précédent le long du chemin respectif,
- on détermine un retard (D_{MAX}) temporel maximum accumulé entre des noeuds de début et des noeuds de fin pour une transmission des flux de données sélectionnés,
- pour la synchronisation entre des cycles de transmission d'applications de commande du côté des noeuds de début et des cycles de transmission d'applications de commande du côté de noeuds de fin, on détermine un début (T_{SYNC}) d'un cycle de transmission prochain du côté des noeuds de fin, par l'application de commande du côté des noeuds de début respectivement, à l'aide du retard temporel déterminé par l'appareil d'infrastructure de réseau précédent, du retard temporel maximum accumulé et d'un instant (TX_{APP}) d'envoi des datagrammes.

2. Procédé suivant la revendication 1,
dans lequel les terminaux de communication et/ou les appareils d'infrastructure de réseau comprennent chacun une horloge, qui est indépendante d'horloges d'autres terminaux de communication et/ou appareils d'infrastructure de réseau et/ou qui n'est pas synchronisée avec des horloges d'autres terminaux de communication et/ou appareils d'infrastructure de réseau.

3. Procédé suivant l'une des revendications 1 ou 2,
dans lequel on détermine le retard (D_{MAX}) temporel maximum accumulé lors d'une réservation de ressources à mettre à disposition par les appareils d'infrastructure de réseau pour la transmission des flux de données sélectionnés.

4. Procédé suivant l'une des revendications 1 à 3,
dans lequel on détermine ou on prescrit, pour les terminaux de communication aux noeuds de fin et les appareils d'infrastructure de réseau, respectivement un retard ((D(i)) temporel maximum du côté de l'entrée entre l'instant de réception de datagrammes et l'instant d'émission planifié,
dans lequel, pour les terminaux de communication aux noeuds de début et les appareils d'infrastructure de réseau, on détermine ou on prescrit respectivement un retard (I(i)) temporel maximum du côté de la sortie entre l'instant d'envoi planifié de datagrammes et l'instant d'envoi,
dans lequel on calcule, mesure ou prescrit respectivement un retard (P(i,i+1)) de transmission maximum pour des sections de transmission entre des terminaux de communication et/ou des appareils d'infrastructure de réseau, et
dans lequel le retard (D_{MAX}) temporel maximum accumulé est une somme de l'ensemble des retards (D(i)) temporels maximums du côté de l'entrée, des retards (I(i)) temporels maximums du côté de la sortie et des retards (P(i,i+1)) maximums de transmission le long d'un chemin pour un flux de données sélectionné.

5. Procédé suivant la revendication 4,
dans lequel les terminaux de communication aux noeuds de début et les appareils d'infrastructure de réseau envoient respectivement une information sur le retard (I(i)) temporel maximum du côté de la sortie à l'appareil d'infrastructure de réseau venant ensuite le long du chemin respectif ou au terminal de communication et
dans lequel les appareils d'infrastructure de réseau calculent l'instant (TX_{P}(i)) d'envoi planifié respectivement à partir
- de l'instant (RX(i)) de réception des datagrammes
- additionné du retard (I(i-1)) temporel maximum du côté de la sortie du terminal de communication ou de l'appareil d'infrastructure de réseau précédent, ainsi que
- du retard (D(i)) temporel maximum du côté de l'entrée, et
- déduction faite du retard (L(i-1)) temporel déterminé par le terminal de communication ou l'appareil d'infrastructure de réseau précédent.

6. Procédé suivant l'une des revendications 3 à 5,
dans lequel on détermine le début (T_{SYNC}) du cycle de transmission prochain du côté des noeuds de fin respectivement à partir
- de l'instant (TX_{APP}) d'émission des datagrammes par l'application de commande respective du côté des noeuds de début
- additionné du retard (D_{MAX}) temporel maximum accumulé, ainsi que
- du retard (L(i-1)) temporel déterminé par l'appareil d'infrastructure de réseau précédent et
- déduction faite de l'instant de réception des datagrammes (RX(i)) par les terminaux de communication aux noeuds de fin, ainsi que
- du retard (I(i-1)) temporel maximum du côté de la sortie de l'appareil d'infrastructure de réseau précédent.

7. Procédé suivant l'une des revendications 3 à 6,
dans lequel les terminaux de communication aux noeuds de début et les appareils d'infrastructure de réseau envoient respectivement une information sur le retard (I(i-1)) temporel maximum du côté de la sortie au moyen d'un message correspondant à simple network management protocol à l'appareil d'infrastructure de réseau suivant le long du chemin respectif ou au terminal de communication.

8. Procédé suivant l'une des revendications 1 à 7,
dans lequel les datagrammes associés aux flux de données sélectionnés sont des trames de données éthernet cadencées et dans lequel les appareils d'infrastructure de réseau envoient l'information sur le retard temporel déterminé respectivement dans une tag de la trame de données d'éthernet respective à l'appareil d'infrastructure de réseau venant ensuite le long du chemin respectif ou au terminal de communication.

9. Procédé suivant l'une des revendications 1 à 8,
dans lequel les terminaux de communication aux noeuds de début ou les applications de commande du côté des noeuds de début envoient une information sur l'instant (TX_{APP}) d'émission des datagrammes par l'application de commande respective du côté des noeuds de début dans une partie de données utiles du datagramme respectif.

10. Procédé suivant l'une des revendications 1 à 9,
dans lequel les terminaux de communication aux noeuds de fin ou les applications de commande du côté des noeuds de fin déterminent respectivement le début (T_{SYNC}) du cycle de transmission prochain du côté des noeuds de fin.

11. Procédé suivant l'une des revendications 1 à 10,
dans lequel les terminaux de communication aux noeuds de début envoient, pour la réservation de ressources mises à disposition par les appareils d'infrastructure de réseau pour une transmission d'un flux de données, des premiers messages (1), en particulier des messages talker advertise, dans lesquels sont précisés respectivement des paramètres de qualité de service comprenant des latences maximums pour le flux de données respectif, et
dans lequel les terminaux de communication aux noeuds de fin envoient, pour une demande de réservation, des deuxièmes messages (2), en particulier des messages listener ready, dans lesquels respectivement est spécifié un identifiant de flux de données, qui est associé au terminal de communication respectif envoyant un premier message.

12. Procédé suivant la revendication 11,
dans lequel les appareils d'infrastructure de réseau contrôlent respectivement, lors d'une demande de réservation à l'aide des premiers et des deuxièmes messages, si sont disponibles, dans les appareils d'infrastructure de réseau le long du chemin respectif, des ressources suffisantes pour la transmission du flux de données en respectant les paramètres de qualité de service spécifiés, et
dans lequel des unités de commande de configuration des appareils d'infrastructure de réseau déterminent le long du chemin, pour le flux de données, alors qu'il y a des ressources suffisantes, respectivement des informations de configuration et agencent l'appareil d'infrastructure de réseau respectif conformément aux informations de configuration déterminées pour la mise à disposition de ressources pour le flux de données.

13. Procédé suivant la revendication 11,
dans lequel un dispositif de commande de communication supérieur hiérarchiquement contrôle, lors d'une demande de réservation à l'aide des premiers et deuxièmes messages respectivement, si sont disponibles, dans les appareils d'infrastructure de réseau le long du chemin respectif, des ressources suffisantes pour la transmission du flux de données en respectant les paramètres de qualité de service spécifiés, et dans lequel le dispositif de commande de communication supérieur hiérarchiquement détermine, lorsqu'il y a des ressources suffisantes, respectivement des informations de configuration des appareils d'infrastructure de réseau le long du chemin pour le flux de données et agence les appareils d'infrastructure de réseau respectifs conformément aux informations de configuration déterminées pour la mise à disposition de ressources pour le flux de données.

14. Procédé suivant l'une des revendications 11 à 13,
dans lequel des ressources réservées pour la transmission de flux de données comprennent des créneaux temporels de transmission utiles, des largeurs de bande, une latence maximum sécurisée, un nombre de queue, un cache queue et/ou un cache d'adresse dans des switches ou des bridges.

15. Appareil d'infrastructure de réseau pour effectuer un procédé suivant l'une des revendications 1 à 14 comprenant
- plusieurs raccordements de connexion à d'autres appareils de communication,
- un élément de couplage, par lequel les raccordements peuvent être reliés entre eux avec possibilité de commutation,
- dans lequel l'appareil d'infrastructure de réseau est conformé et agencé pour, lors d'un acheminement de datagrammes (11-12) associés à des flux de données sélectionnés, déterminer respectivement un retard (L(i)) entre un instant (TX_{P}(i)) d'envoi planifié d'un datagramme et son instant (TX(i)) d'émission réel, dans lequel les flux de données sélectionnés sont associés à des applications de commande se déroulant sur des terminaux (201, 202) de communication,
- dans lequel l'appareil d'infrastructure de réseau est conformé et agencé en outre pour envoyer respectivement une information sur le retard temporel déterminé à un terminal de communication ou à un appareil d'infrastructure de réseau venant ensuite le long d'un chemin pour un flux de données sélectionné,
- dans lequel l'appareil d'infrastructure de réseau est conformé et agencé en outre pour calculer l'instant (TX_{P}(i)) d'envoi planifié respectivement à l'aide d'un instant de réception des datagrammes (RX(i)) et d'un retard (L(i-1)) temporel déterminé par un terminal de communication ou un appareil d'infrastructure de réseau précédent le long du chemin respectif.
